# EUROPEAN PATENT SPECIFICATION

(11) **EP 2 679 066 B1**
(45) Date of publication and mention of the grant of the patent: **10.07.2019**
(21) Application number: 12749257.7
(22) Date of filing: 27.02.2012
(51) Int. Cl.: H04W 48/16, H04W 64/00, H04W 16/32

(54) **PROVIDING SMALL CELL INFORMATION TO USER EQUIPMENTS IN A HETEROGENEOUS NETWORK ENVIRONMENT**
BEREITSTELLUNG KLEINZELLIGER INFORMATIONEN AN BENUTZERGERÄTE IN EINER HETEROGENEN NETZWERKUMGEBUNG
MISE À LA DISPOSITION DES ÉQUIPEMENTS UTILISATEUR DES INFORMATIONS CONCERNANT DE PETITES CELLULES DANS UN ENVIRONNEMENT DE RÉSEAU HÉTÉROGÈNE

(30) Priority: 25.02.2011 IN 566CH2011
(43) Date of publication of application: 01.01.2014
(73) Proprietor: Samsung Electronics Co., Ltd., Suwon-si, Gyeonggi-do 443-742 (KR)
(72) Inventor: JAMADAGNI, Satish Nanjunda Swamy, Bangalore 560093 (IN); RAJADURAI, Rajavelsamy, Bangalore 560093 (IN)
(74) Representative: Nederlandsch Octrooibureau
(86) International application number: PCT/KR2012/001455
(87) International publication number: WO 2012/115489

(56) References cited:
- US-A1- 2003 118 015
- US-A1- 2004 106 379
- US-A1- 2007 167 174
- US-A1- 2007 167 174
- US-A1- 2009 191 892
- US-A1- 2010 003 980
- US-A1- 2010 183 134
- US-A1- 2010 240 397
- US-A1- 2011 016 006

## Description

### Technical Field

The present invention relates to the field of wireless communication system, more particularly relates to a method and system for providing small cell information to user equipments in a heterogeneous network environment.

### Background Art

Today, user equipments that combine mobile computing functionality with mobile phone functionality such as smart phones, personal digital assistant (PDA) phones and the like, are becoming increasingly popular. These devices are usually equipped with multiple wireless network interfaces including cellular network interface (provided by a cellular radio on a device) and a wireless fidelity (Wi-Fi) interface (provided by a Wi-Fi radio on the device).

Typically, the user equipment accesses a macro cell, a pico cell, or a femto cell using the cellular network interface while the user equipment accesses Wi-Fi access point using the Wi-Fi interface. In wireless network standards, pico cells, femto cells and Wi-Fi access points are commonly termed as small cells. The small cells are generally deployed to improve indoor coverage and cell-edge user performance and boost spectral efficiency per area unit via spatial reuse. The small cells either operator deployed or user deployed and may coexist in same geographical area, potentially sharing the same spectrum or a different spectrum.

US 2009/191892 A1 discloses a method for obtaining, by an electronic device, position information by using position-determining functions and Wi-Fi functions. Wi-Fi data received by the electronic device is used by the electronic device to detect a Wi-Fi network available within a geographical region associated with the device. US 2003/118015 A1 discloses a system and method in which a wireless mobile terminal is altered to the presence of an available WLAN by a communication network, based on the location of the mobile terminal.

US 2010/003980 A1 discloses a method performed by a 3GPP Access Network Discovery and Selection Function (ANDSF) to automatically configure a map of inter-access technology neighbor relations. The neighbor relations map maintains relationships between neighboring cells of differing access networks of the same or different access technologies. Extra-domain and non-domain neighbor relations are included.

US 2007/167174 A1 discloses a WiFi-enabled and GPS-enabled user device that executes a hotspot location utility, which enables the device to detect WiFi hotspots and update a locally-stored hotspot location database (LHLD) containing geographically-mapped hotspots.

### Disclosure of Invention

### Technical Problem

For accessing the small cells, typically, the user equipment continuously scans for one or more small cells when in idle state. This may lead to significant amount of wastage of battery power as most of the times the user equipment may perform continuous passive scans for detecting small cells even when there are no small cells in vicinity of the user equipment. Continuous passive scan for small cells reduces battery life of the user equipment by almost half between consecutive charges.

### Solution to Problem

The invention is defined in the claims.

### Brief Description of the Drawings.

Figure 1 is a schematic diagram illustrating a heterogeneous network environment including a core network for providing location based small cell information to user equipments via macro cells, according to one embodiment.
Figure 2 is a flow diagram illustrating an exemplary method of notifying availability of small cell(s) in proximity to the user equipment, according to one embodiment.
Figure 3is a schematic diagram illustrating a Long Term Evolution (LTE) system for providing location based small cell information to the user equipment, according to one embodiment.
Figure 4 is a flow diagram illustrating an interaction between network entities of the LTE system for providing location based small cell information to the user equipment, according to one embodiment.
Figure 5illustrates a block diagram of a mobility management entity showing various components for implementing embodiments of the present subject matter.
Figure 6 is a block diagram of the user equipment showing various components for implementing embodiments of the present subject matter.

The drawings described herein are for illustration purposes only and are not intended to limit the scope of the present disclosure in any way.

### Mode for the Invention

The present invention provides a method and system for providing small cell information to user equipments in a heterogeneous network environment. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

The terms 'proximity', 'geographic proximity' and 'vicinity' are interchangeably used throughout the document.

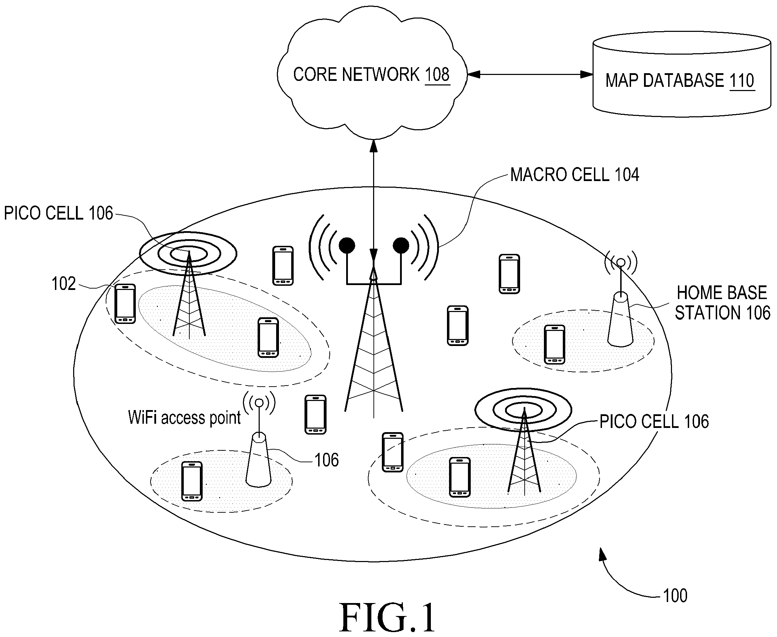

Figure 1 is a schematic diagram illustrating a heterogeneous network environment 100 including a core network for providing location based small cell information to user equipments via macro cells, according to one embodiment. In Figure 1, the heterogeneous network environment 100 includes user equipments 102, a macro cell 104, small cells 106, a core network 108, and a map database 110.

The user equipments 102 include devices that combine mobile computing functionality with mobile phone functionality such as smart phones, personal digital assistant (PDA) phones and the like. The user equipments 102 are in coverage area of the macro cell are connected to the core network 108 via the macro cell 104. The user equipments 102 may be mobile or static within the coverage of the macro cell 108. The small cells 106 include pico cells, femto cell, Wi-Fi access points located within the coverage area of the macro cell 108. The smalls cells 106 are deployed by an operator or a user to improve indoor coverage and cell-edge user performance, and boost spectral efficiency per area unit via spatial reuse. Also, the small cells 106 are scattered within the coverage area of the macro cell 104 so that load on the macro cell 104 can be mitigated.

Consider that, one of the user equipments 102 wishes to access one or more small cells 106 located within the network coverage area of the macro cell 108. In such case, the user equipment 102 sends a request message to the core network 108 to notify in case there are small cells 106 available in vicinity of the user equipment 102. The request message may include type of interested small cells 106, location of the user equipment 102 and so on. Based on the request, the core network 108 determines whether there exists any small cell in the geographic proximity to the user equipment 102 based on the location of the user equipment 102. In one embodiment, the core network 108 fetches a small cell map from the map database 110 and performs the determination by comparing the location of the user equipment 102 with location of the small cells 106 in the small cell map.

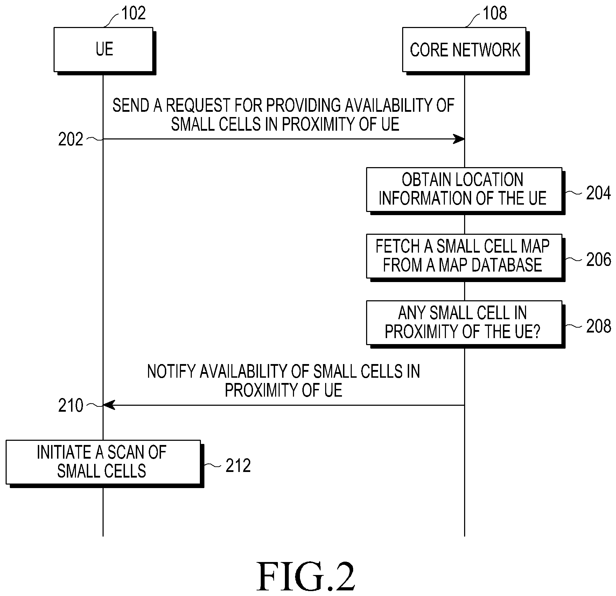

If the small cell(s) 106 is detected, the core network 108 notifies the availability of the small cell(s) 106 in its proximity to the user equipment 102. Accordingly, the user equipment 102 initiates scan for small cell(s) 106 indicated in the notification for accessing one or more small cell(s) 106 in its proximity. This helps save significant amount of battery power required by the user equipment 102 for performing continuous passive scan of small cells 106. The interaction between the user equipment 102 and the core network 108 is described in greater detail in below description of Figure 2.

Figure 2 is a flow diagram 200 illustrating an exemplary method of notifying availability of small cell(s) in proximity to the user equipment, according to one embodiment. At step 202, the user equipment 102 sends a request for providing availability of small cell(s) in its geographical proximity to the core network 108 via the macro cell 104. In some embodiments, the user equipment 102 may provide geographical coordinates, type of small cells 106 of interest and capabilities of the user equipment 102 to access different types of small cells 106 to the core network 108 in the request. For example, if the user equipment is Wi-Fi enabled device, the request may indicate type of small cells as Wi-Fi access point, and capabilities as Wi-Fi enabled. Alternatively, the user equipment 102 can communicate capabilities of the user equipment 102 with the core network 108 through a capability exchange procedure.

At step 204, the core network 108 obtains location information indicative of current location of the user equipment 102. In one embodiment, the core network tracks location of the user equipment 102 in real time based on a tracking area identifier, e Node B identifier or a cell identifier. In another embodiment, the core network 108 obtains current location of the user equipment 102 from the user equipment 102. In yet another embodiment, the core network 108 uses geographical coordinates indicated in the received request as current location of the user equipment 102. In further another embodiment, the core network 108 may request a serving mobile location centre or any location server to provide current location information of the user equipment 102.

At step 206, the core network 108 fetches a small cell map from a map database. At step 208, the core network 108 determines whether there is any small cell available in proximity of the user equipment 102. During determination at step 208, the core network 108 may consider granularity of small cells 106 located around the user equipment 102 as sector level granularity, cell level granularity, tracking area granularity, location area granularity, or routing area granularity. For example, the core network 108 knows cell level granularity of UE's location when the user equipment is in connected mode. However, when the user equipment 102 is in idle mode, the granularity of the location is tracking area granularity or location area granularity.

At step 210, the core network 108 notifies availability of small cell(s) around the UE's current location to the user equipment 102. In one embodiment, the core network 108 transmits the small cell map overlapped with cell identifier information, type of small cells 106 located around the user equipment 102, and cell access parameters associated with the small cells 106 to the user equipment 102. In another embodiment, the core network 108 transmits the geographic co-ordinates map, type of small cells 106 located around the user equipment 102, cell access parameters associated with the small cells 106 to the user equipment 102. It can be noted that, maps (small cell maps overlapped with cell identified information or geographical coordinate maps) can be of different size granularities for a known granularity of UE's location. That is, given the location granularity knowledge about the user equipment 102, the core network 108 can provide the user equipment 102 with small cell maps overlapped with cell identifier information or geographic coordinate maps to the known granularity. In yet another embodiment, the core network 108 transmits small cell information associated with small cells 106 surrounding the user equipment 102.

In one exemplary implementation, the core network 108 provides the small cell maps overlapped with cell identifier information, the geographic coordinate maps, or the small cell information to the user equipment 102 in a non-access stratum message. In some embodiments, the core network 108 provides the small cell maps overlapped with cell identifier information, the geographic coordinate maps, or the small cell information to the user equipment 102 in a new non-access stratum message or in an existing non-access stratum message such as tracking area update (TAU) response. For example, the user equipment 102 sends a TAU request to the core network 108 for notifying availability of one or more small cells 106 in its geographic proximity. The core network 108 sends a TAU response including the small cell maps overlapped with cell identifier information, the geographic coordinate maps, or the small cell information to the user equipment 102. The TAU request-response procedure is followed when the user equipment 102 is in idle mode (i.e., not involved in data communication with the core network 108).

In another exemplary implementation, the core network 108 provides the small cell maps overlapped with cell identifier information, the geographic coordinate maps, or the small cell information to the user equipment 102 in a Layer 2 or Layer 3 messages such as radio resource connection (RRC) message, a RRC connection reconfiguration message, and a proximity indication configuration message.

In further another exemplary implementation, the core network 108 broadcasts the small cell maps overlapped with cell identifier information, the geographic coordinate maps, or the small cell information to the user equipment 102 in a system information message. In still another exemplary implementation, the core network 108 broadcasts the small cell maps overlapped with cell identifier information, the geographic coordinate maps, or the small cell information to the user equipment 102 in a Multimedia Broadcast Multicast System (MBMS) channels such as MBMS control channel or a MBMS traffic channel.

In yet a further exemplary implementation, the user equipment 102 obtains the small cell maps overlapped with cell identifier information, the geographic coordinate maps, or the small cell information from the core network 108 when the core network 108 configures the user equipment 102 for measurements or minimization drive test (MDT) logs. In further another exemplary implementation, the core network 108 may transmit a push notification indicating availability of the one or more small cells 106 in the geographical proximity, where the push notification may include the small cell maps overlapped with cell identifier information, the geographic coordinate maps, or the small cell information to the user equipment 102.

At step 212, the user equipment 102 may initiate a complete or selective scan for small cells 106 indicated via the notification by the core network 108. This helps the user equipment 102 to conserve battery power as scan for small cells 106 is initiated upon receiving a notification indicating availability of small cells 106 in the geographic proximity of the user equipment 102. In this manner, scan for the small cell(s) is localized in the heterogeneous network environment 100.

If, at step 208, it is determined that no small cells 106 available in proximity, then the core network 108 sends a notification indicating that small cells 106 are unavailable in the proximity of the user equipment 102 in a broadcast message or a dedicated control channel message. Accordingly, the user equipment 102 determines whether there is any scan ongoing for detecting small cells 106 and instantaneously terminates the ongoing scan for small cells 106.

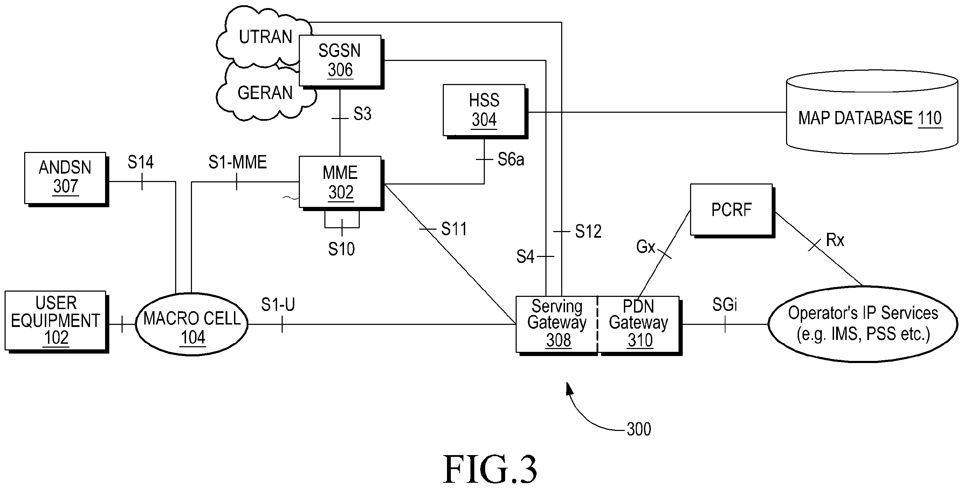

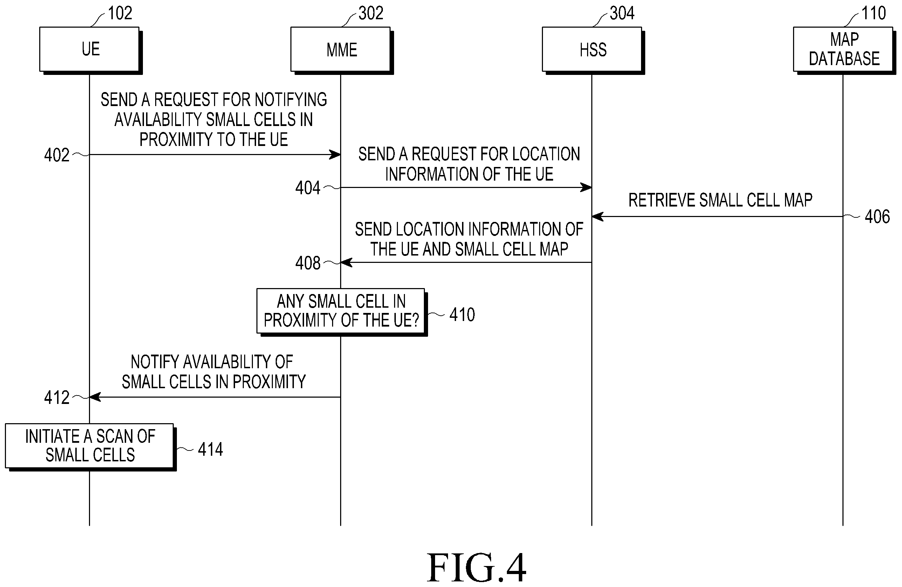

Figure 3 is a schematic diagram illustrating a Long Term Evolution system for providing location based small cell information to the user equipment 102, according to one embodiment. Particularly, Figure 3 illustrates a LTE core network 108 including various core network entities involved in notifying availability of small cells 106 in geographic proximity to the user equipment 102. It is appreciated that, the LTE core network 300 is an exemplary embodiment of the core network 108 of Figure 1. The core network entities include a mobility management entity (MME) 302, a home subscriber server (HSS) 304, a serving GPRS support node (SGSN) 306, an Access Network Discovery and Selection Function (ANDSF) 307, a serving gateway 308, and a public data network (PDN) gateway 310. The user equipment 102 is connected to the MME 302 via the macro cell 104 and the HSS 304 is connected to the map database 110. The interaction between various core network entities such as the MME 302 and the HSS 304 is described greater detail in description of Figure 4 below. Other network entities such as the SGSN 306, the ANDSN 307, the serving gateway 308, and the PDN gateway 310 are well known to the person skilled in the art and hence explanation is thereof omitted.

Referring to Figure 4, at step 402, the user equipment 102 sends a request to the MME 302 for notifying availability of small cell(s) 106 in its geographic proximity. For example, the request may include geographical coordinates, type of small cells 106 of interest and capabilities of the user equipment 102 to access different types of small cells 106. In case, the request does not include the capabilities of the user equipment 102, the MME 302 may obtain the capabilities of user equipment 102 from the HSS 304 or derive the capability to support multiple radio access technologies from the International Mobile Equipment Identity (IMEI). At step 404, the MME 302 sends a request to the HSS 304 for providing location information associated with the user equipment 102. At step 406, the HSS retrieves a small cell map overlapped with cell identifier information from the map database 110.

At step 408, the HSS 304 provides the location information associated with the user equipment 102 and the small cell map overlapped with cell identifier information to the MME 302. At step 410, the MME 302 determines whether there exists any small cell 106 in geographical proximity to the user equipment 102. If there are any small cells 106, the MME 302 sends a notification message including small cell information and the small cell map overlapped with cell identifier information or geographical coordinate map to the user equipment 302, at step 412. Thus, at step 414, the user equipment 102 initiates a scan for small cells 106 in its geographic vicinity based on the notification message.

Although, in Figure 3, the map database 110 is shown to be connected to the HSS 304, one skilled in the art can realize that the map database 110 can be connected to any of other core network entities such as the MME 302, the SGSN 306 and so on. Further, it is understood that, the process steps described in Figures 2 and 4 can be implemented in the core network entities such as the HSS 304, the SGSN 306, and the ANDSN 307 instead of the MME 302. One can envision that, the process steps described in Figures 2 and 4 can be implemented in other network systems such as GSM EDGE Radio Access Network (GERAN) and UMTS Terrestrial Radio Access Network (UTRAN).

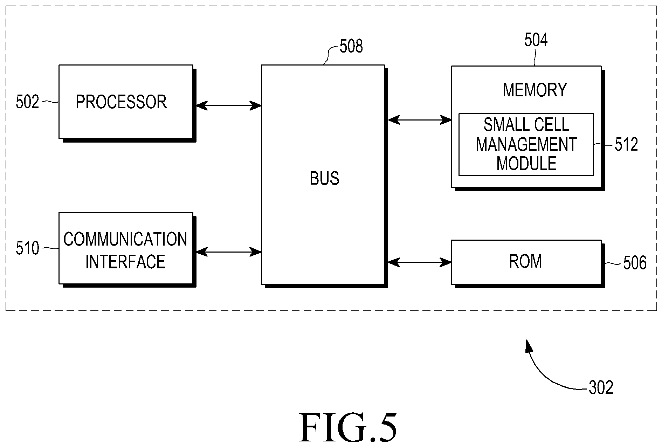

Figure 5 illustrates a block diagram of the MME 302 showing various components for implementing embodiments of the present subject matter. In Figure 5, the MME 302 includes a processor 502, memory 504, a read only memory (ROM) 506, a bus 508, and a transceiver 510.

The processor 502, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 502 may also include embedded controllers, such as generic or programmable logic devices or arrays, application specific integrated circuits, single-chip computers, smart cards, and the like.

The memory 504 may be volatile memory and non-volatile memory. The memory 504 includes a small cell management module 512 for determining whether there are any cells in proximity to the user equipment 102 and providing a notification to the user equipment 102 if small cells 106 are unavailable or available in proximity to the user equipment, according to the embodiments illustrated in Figures 1 and 4. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling memory cards, Memory Sticks™, and the like.

Embodiments of the present subject matter may be implemented in conjunction with modules, including functions, procedures, data structures, and application programs, for performing tasks, or defining abstract data types or low-level hardware contexts. The small cell management module 512 may be stored in the form of machine-readable instructions on any of the above-mentioned storage media which is then executed by the processor 502. For example, a computer program may include machine-readable instructions capable of providing a notification to the user equipment 102 regarding unavailability/availability of the small cells 106 in the geographical proximity of the user equipment 102, according to the teachings and herein described embodiments of the present subject matter. In one embodiment, the computer program may be included on a storage medium and loaded from the storage medium to a hard drive in the non-volatile memory. The components such as the ROM 506, the bus 508, and the transceiver 510 are well known to the person skilled in the art and hence the explanation is thereof omitted.

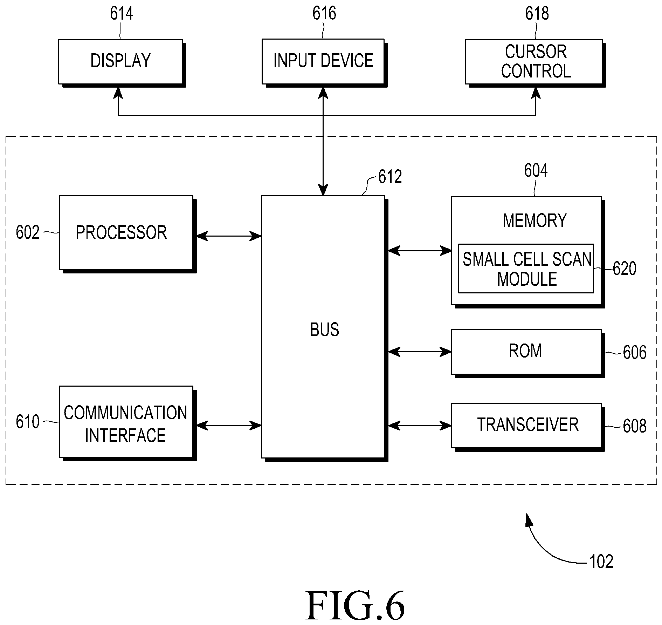

Figure 6 is a block diagram of the user equipment 102 showing various components for implementing embodiments of the present subject matter. In Figure 6, the user equipment 102 includes a processor 602, memory 604, a read only memory (ROM) 606, a transceiver 608, a bus 612, a communication interface 610, a display 614, an input device 616, and a cursor control 618.

The processor 602, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 602 may also include embedded controllers, such as generic or programmable logic devices or arrays, application specific integrated circuits, single-chip computers, smart cards, and the like.

The memory 604 and the ROM 606 may be volatile memory and non-volatile memory. The memory 604 includes a small cell scan module 620 for requesting the core network 108 to intimate availability of small cells 106 in geographical proximity and triggering a scan for small cells 106 upon receiving indication regarding the availability of small cells 106 in the pre-defined geographic proximity, according to one or more embodiments illustrated in Figures 1-4. A variety of computer-readable storage media may be stored in and accessed from the memory elements. Memory elements may include any suitable memory device(s) for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, Memory Sticks™, and the like.

Embodiments of the present subject matter may be implemented in conjunction with modules, including functions, procedures, data structures, and application programs, for performing tasks, or defining abstract data types or low-level hardware contexts. In one embodiment, the small cell scan module 620 is stored in the form of machine-readable instructions on any of the above-mentioned storage media and is then executed by the processor 602. For example, a computer program may include the machine-readable instructions capable of performing one or more steps for requesting the core network 108 to intimate availability of small cells 106 in geographical proximity and triggering a scan for small cells 106 upon receiving indication regarding the availability of small cells 106 in the pre-defined geographic proximity, according to the teachings and herein described embodiments of the present subject matter. In one embodiment, the program may be included on a compact disk-read only memory (CD-ROM) and loaded from the CD-ROM to a hard drive in the non-volatile memory.

The transceiver 608 may be capable of transmitting a request to the core network 108 to intimate availability of small cells 106 in geographical proximity and receiving an indication regarding the availability of small cells 106 in the pre-defined geographic proximity from the core network 108. The bus 612 acts as interconnect between various components of the user equipment 102. The components such as communication interfaces 610, the display 614, the input device 616, and the cursor control 618 are well known to the person skilled in the art and hence the explanation is thereof omitted.

In accordance with the embodiments described in Figures 1-6, the core network 108 may send a push notification indicating availability of small cells 106 in the geographic proximity when the macro cell 104 wishes to handover the wireless connection with the user equipment 102 to one of the small cells 106 available in the geographic proximity of the user equipment 102. For example, the macro cell 104 may decide to perform handover of wireless connection due to poor signal quality, load on the macro cell 104, and/or type of data transmission. The core network 108 may send a push notification in any known control message or a new message. Thus, upon receiving the push notification, the user equipment 102 can initiate a scan for small cells 106 in its proximity. It can be noted that, the user equipment 102 may initiate a scan for small cells 106 only after receiving a notification from the core network 108 and terminate the scan upon detecting a desired small cell 106 or after successful handover to the desired small cell 106.

The present embodiments have been described with reference to specific example embodiments, it will be evident that various modifications and changes may be made to these embodiments without departing from the scope of the invention as defined by the claims.

Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

## Claims

1. A method for providing small cell information performed by a core network entity (108) in a wireless communication system, the method comprising:
obtaining location information associated with a user equipment (102); **characterized by**:
receiving a tracking area update, TAU, request from the user equipment for availability of one or more small cells (106) that the user equipment wishes to access in proximity of the user equipment;
determining whether one or more small cells are in proximity of the user equipment, based on the obtained location information associated with the user equipment and on comparing the obtained location information with location information of small cells in a small cell map displaying the one or more small cells retrieved from a map database of the wireless communication system; and
when one or more small cells are in the proximity of the user equipment, providing, to the user equipment, a notification indicating availability of the one or more small cells in the proximity of the user equipment,
wherein the providing of the notification indicating availability of the one or more small cells (106) in the proximity of the user equipment (102) comprises transmitting, to the user equipment, a tracking area update, TAU, response including the small cell map.

2. The method of claim 1, further comprising:
if no small cells (106) are in the proximity of the user equipment (102), providing a notification indicating that no small cells are available in the proximity of the user equipment.

3. The method of claim 1, wherein the obtaining of the location information associated with the user equipment (102) comprises:
one of tracking a location of the user equipment based on one or more of a cell identifier, evolved node B, eNB, identifier, and tracking area identifier, and periodically receiving, from the user equipment, geographical coordinate information indicating a current location of the user equipment.

4. The method of claim 1, wherein the determining of whether the one or more small cells (106) are in the proximity of the user equipment based (102) on the small cell map comprises:
retrieving a small cell map from the map database; and
mapping the location of the user equipment with a location of small cells in the small cell map.

5. The method of claim 1, wherein the small cell map is transmitted to the user equipment (102) in one of a non-access stratum message, a Layer 2/Layer 3 message, and a system information message when the wireless communication system is a Long Term Evolution, LTE, system, and
wherein the small cell map is transmitted to the user equipment over one of a radio channel and a Multi-media Broadcast Multicast System, MBMS, channel.

6. The method of claim 1, wherein the providing of the notification indicating availability of the one or more small cells (106) in the proximity of the user equipment (102) comprises:
broadcasting the notification indicating the availability of the one or more small cells in proximity to the user equipment, and
wherein the notification includes a push notification indicating the availability of the one or more small cells in proximity to the user equipment.

7. A method for receiving small cell information performed by a user equipment (102) in a wireless communication system, the method being **characterized by**:
sending a tracking area update, TAU, request to a core network entity (108) for availability of one or more small cells (106) in proximity of the user equipment that the user equipment wishes to access;
receiving a notification indicating availability of the one or more small cells in the proximity of the user equipment from the core network entity; and
initiating a scan for the one or more small cells based on the received notification,
wherein the receiving of the notification indicating availability of the one or more small cells (106) in the proximity of the user equipment (102) from the core network entity (108) comprises receiving a tracking area update, TAU, response including a small cell map from the core network entity.

8. The method of claim 7, wherein the sending of the request to the core network entity (108) for availability of the one or more small cells (106) in the proximity of the user equipment (102) comprises sending a Tracking Area Update, TAU, request to the core network entity requesting information on availability of the one or more small cells in the proximity of the user equipment,
wherein the receiving of the notification indicating availability of the one or more small cells in the proximity of the user equipment from the core network entity comprises receiving a TAU response including small cell map information from the core network entity, and
wherein the request for providing availability of the one or more small cells comprises at least one of location information and capabilities of the user equipment to access different types of small cells.

9. The method of claim 7, wherein the receiving of the notification indicating availability of the one or more small cells (106) in the proximity of the user equipment (102) from the core network entity (108) comprises:
receiving a notification including small cell map information from the base station in one of a non-access stratum message, and a Layer 2/Layer 3 message, and a system information message when the wireless communication system is a Long Term Evolution, LTE, system.

10. The method of claim 7, wherein the small cell map is obtained from the core network entity when the core network entity configures the user equipment for measurements and minimization of drive test logs.

11. The method of claim 7, wherein the receiving of the notification indicating availability of the one or more small cells (106) in the proximity of the user equipment (102) from the core network entity (108) comprises:
transmitting geographic coordinates representing a current location of the user equipment to the core network entity; and
receiving a notification indicating availability of the one or more small cells in the proximity of the user equipment from the core network entity in response to the location information.

12. The method of claim 7, further comprising:
receiving a notification from the core network entity indicating that no small cells are available in the proximity of the user equipment;
determining whether a scan for detecting the one or more small cells in the proximity of the user equipment is ongoing; and
terminating any ongoing scan for the one or more small cells based on the determination.

13. A core network entity (108) for providing small cell information, the core network entity being adapted to perform the method defined in claims 1 to 6.

14. A user equipment (102) for receiving small cell information, the user equipment being adapted to perform the method defined in claims 7 to 12.

## Patentansprüche

1. Verfahren zur Bereitstellung von Informationen in Bezug auf Kleinzellen, das durch eine Kernnetzeinheit (108) in einem drahtlosen Kommunikationssystem durchgeführt wird, wobei das Verfahren Folgendes umfasst:
Erhalt von Ortsinformationen, die einem Benutzergerät (102) zugeordnet sind;
**gekennzeichnet durch**:
Empfang einer Anfrage auf Aktualisierung des Verfolgungsbereichs, TAU, vom Benutzergerät nach Verfügbarkeit einer oder mehrerer Kleinzellen (106), auf die das Benutzergerät in der Nähe des Benutzergeräts zugreifen möchte;
Bestimmen, ob sich eine oder mehrere Kleinzellen in der Nähe des Benutzergeräts befinden, basierend auf den mit dem Benutzergerät verknüpften, ermittelten Ortsinformationen und dem Vergleich der erhaltenen Ortsinformationen mit Ortsinformationen von Kleinzellen in einer Kleinzellenkarte, die die eine oder mehrere Kleinzellen anzeigen, die aus einer Kartendatenbank des drahtlosen Kommunikationssystems abgerufen werden; und
wenn sich eine oder mehrere Kleinzellen in der Nähe des Benutzergeräts befinden, Bereitstellung einer Benachrichtigung an das Benutzergerät, wobei eine Verfügbarkeit der einen oder mehrerer Kleinzellen in der Nähe des Benutzergeräts anzeigt wird,
wobei die Bereitstellung der Benachrichtigung, die die Verfügbarkeit der einen oder mehrerer Kleinzellen (106) in der Nähe des Benutzergeräts (102) anzeigt, die Übertragung einer Antwort auf Aktualisierung des Verfolgungsbereichs, TAU, an das Benutzergerät umfasst, einschließlich der Kleinzellenkarte.

2. Verfahren nach Anspruch 1, das des Weiteren Folgendes umfasst:
wenn sich keine Kleinzellen (106) in der Nähe des Benutzergeräts (102) befinden, Bereitstellung einer Benachrichtigung, die anzeigt, dass keine Kleinzellen in der Nähe des Benutzergeräts verfügbar sind.

3. Verfahren nach Anspruch 1, wobei das Erhalten der dem Benutzergerät (102) zugeordneten Ortsinformationen Folgendes umfasst:
Verfolgen eines Orts des Benutzergeräts auf der Grundlage eines oder mehrerer Zellkennungen, weiterentwickelter Knoten B(eNB)-Kennungen und TA-Kennungen und regelmäßigen Empfang von geografischen Koordinateninformationen von dem Benutzergerät, die einen aktuellen Ort des Benutzergeräts angeben.

4. Verfahren nach Anspruch 1, wobei das Bestimmen, ob die eine oder mehrere Kleinzellen (106) sich in der Nähe des Benutzergeräts (102) befinden, basierend auf der Kleinzellenkarte Folgendes umfasst:
Abrufen einer Kleinzellenkarte aus der Kartendatenbank; und
Abbilden der Position des Benutzergeräts mit einer Position von Kleinzellen in der Kleinzellenkarte.

5. Verfahren nach Anspruch 1, wobei die Kleinzellenkarte an das Benutzergerät (102) übertragen wird, in einer Nichtzugriffsschichtnachricht, eine Schicht 2/Schicht 3 Nachricht und eine Systeminformationsnachricht, wenn das drahtlose Kommunikationssystem ein System zur langfristigen Entwicklung, LTE- ist, und
wobei die Kleinzellenkarte über ein Funkkanal oder ein Multimedia Broadcast Multicast System MBMS-Kanal an das Benutzergerät übertragen wird.

6. Verfahren nach Anspruch 1, wobei die Bereitstellung der Benachrichtigung, die die Verfügbarkeit der einen oder mehrerer Kleinzellen (106) in der Nähe des Benutzergeräts (102) anzeigt, Folgendes umfasst:
Übertragung der Benachrichtigung, die die Verfügbarkeit der einen oder mehrerer Kleinzellen in der Nähe des Benutzergeräts anzeigt, und
wobei die Benachrichtigung eine Push-Benachrichtigung umfasst, die die Verfügbarkeit der einen oder mehrerer Kleinzellen in der Nähe des Benutzergeräts anzeigt.

7. Verfahren zum Empfangen von Informationen in Bezug auf Kleinzellen, das von einem Benutzergerät (102) in einem drahtlosen Kommunikationssystem ausgeführt wird, wobei das Verfahren **gekennzeichnet ist durch**:
Senden einer Anfrage auf Aktualisierung des Verfolgungsbereichs, TAU, an eine Kernnetzeinheit (108) zur Verfügbarkeit einer oder mehrerer Kleinzellen (106) in Nähe des Benutzergeräts auf die das Benutzergerät zugreifen möchte;
Empfang einer Benachrichtigung, die die Verfügbarkeit der einen oder mehrerer Kleinzellen in der Nähe des Benutzergeräts anzeigt, von der Kernnetzeinheit; und
Starten eines Scans für die eine oder mehreren Kleinzellen basierend auf der empfangenen Benachrichtigung,
wobei der Empfang der Benachrichtigung, die die Verfügbarkeit der einen oder mehrerer Kleinzellen (106) in der Nähe des Benutzergeräts (102) anzeigt, von der Kernnetzeinheit (108) den Empfang einer Anfrage auf Aktualisierung des Verfolgungsbereichs, TAU, umfasst, einschließlich einer Kleinzellenkarte von der Kernnetzeinheit.

8. Verfahren nach Anspruch 7, wobei das Senden der Anfrage an die Kernnetzeinheit (108) zur Verfügbarkeit der einen oder mehrerer Kleinzellen (106) in der Nähe des Benutzergeräts (102) das Senden einer Anfrage auf Aktualisierung des Verfolgungsbereichs, TAU, an die Kernnetzeinheit umfasst, die Informationen über die Verfügbarkeit der einen oder mehrerer Kleinzellen in der Nähe der Benutzergeräts anfordert,
wobei der Empfang der Benachrichtigung, die die Verfügbarkeit der einen oder mehrerer Kleinzellen in der Nähe des Benutzergeräts anzeigt, von der Kernnetzeinheit den Empfang einer TAU-Antwort umfasst, einschließlich einer Karteninformation in Bezug auf Kleinzellen von der Kernnetzeinheit und
wobei die Anfrage zum Bereitstellen einer Verfügbarkeit der einen oder mehrerer Kleinzellen mindestens eine Ortsinformation und Fähigkeiten des Benutzergeräts umfasst, um auf verschiedene Arten von Kleinzellen zuzugreifen.

9. Verfahren nach Anspruch 7, wobei der Empfang von der Kernnetzeinheit (108) der Benachrichtigung, die die Verfügbarkeit der einen oder mehrerer Kleinzellen (106) in der Nähe des Benutzergeräts (102) anzeigt, Folgendes umfasst:
Empfang einer Benachrichtigung, die Karteninformationen in Bezug auf Kleinzellen enthält, von einer Basisstation in einer Nichtzugriffsschichtnachricht oder einer Schicht 2/Schicht 3 Nachricht und einer Systeminformationsnachricht, wenn das drahtlose Kommunikationssystem ein Langzeitentwicklungs(LTE)system ist.

10. Verfahren nach Anspruch 7, wobei die Kleinzellenkarte von der Kernnetzeinheit erhalten wird, wenn die Kernnetzeinheit das Benutzergerät für Messungen und Minimierung von Fahrtestprotokollen konfiguriert.

11. Verfahren nach Anspruch 7, wobei der Empfang von der Kernnetzeinheit (108) der Benachrichtigung, die die Verfügbarkeit der einen oder mehrerer Kleinzellen (106) in der Nähe des Benutzergeräts (102) anzeigt, Folgendes umfasst:
Übertragen von geographischen Koordinaten, die einen aktuellen Standort des Benutzergeräts darstellen an die Kernnetzeinheit; und
Empfang von der Kernnetzeinheit einer Benachrichtigung, die die Verfügbarkeit der einen oder mehrerer Kleinzellen in der Nähe des Benutzergeräts anzeigt, als Antwort auf die Ortsinformationen.

12. Verfahren nach Anspruch 7, das des Weiteren Folgendes umfasst:
Empfang einer Benachrichtigung von der Kernnetzeinheit, die anzeigt, dass in der Nähe des Benutzergeräts keine Kleinzellen verfügbar sind;
Bestimmen, ob ein Scan zum Erfassen der einen oder mehrerer Kleinzellen in der Nähe des Benutzergeräts läuft; und
Beenden eines laufenden Scans für die eine oder mehrere Kleinzellen basierend auf der Bestimmung.

13. Kernnetzeinheit (108) zur Bereitstellung von Informationen in Bezug auf Kleinzellen, wobei die Kernnetzeinheit dafür ausgelegt ist, das in den Ansprüchen 1 bis 6 definierte Verfahren auszuführen.

14. Benutzergerät (102) zum Empfangen von Informationen in Bezug auf Kleinzellen, wobei das Benutzergerät dafür ausgelegt ist, das in den Ansprüchen 7 bis 12 definierte Verfahren auszuführen.

## Revendications

1. Procédé pour la mise à disposition des informations concernant de petites cellules effectué par une entité de réseau central (108) dans un système de communication sans fil, le procédé comprenant :
obtenir des informations de localisation associées à un équipement d'utilisateur (102); **caractérisé par** :
recevoir une demande de mise à jour de zone de suivi, TAU, en provenance de l'équipement d'utilisateur pour la disponibilité d'une ou plusieurs petites cellules (106) auxquelles l'équipement d'utilisateur souhaite accéder à proximité de l'équipement d'utilisateur;
déterminer si une ou plusieurs petites cellules sont à proximité de l'équipement d'utilisateur, sur la base des informations de localisation obtenues associées à l'équipement d'utilisateur et sur la base de la comparaison des informations de localisation obtenues avec des informations de localisation de petites cellules sur une carte de petites cellules affichant l'une ou plusieurs petites cellules récupérées à partir d'une base de données cartographique du système de communication sans fil; et
lorsqu'une ou plusieurs petites cellules se trouvent à proximité de l'équipement d'utilisateur, fournir, à l'équipement d'utilisateur, une notification qui indique la disponibilité de l'une ou plusieurs petites cellules à proximité de l'équipement d'utilisateur,
où la fourniture de la notification qui indique la disponibilité de l'une ou plusieurs petites cellules (106) à proximité de l'équipement d'utilisateur (102) comprend la transmission, à l'équipement d'utilisateur, d'une réponse de mise à jour de zone de suivi, TAU, comprenant la carte de petites cellules.

2. Procédé selon la revendication 1, comprenant en outre :
si aucune petite cellule (106) ne se trouve à proximité de l'équipement d'utilisateur (102), fournir une notification qui indique qu'aucune petite cellule n'est disponible à proximité de l'équipement d'utilisateur.

3. Procédé selon la revendication 1, où l'obtention des informations de localisation associées à l'équipement d'utilisateur (102) comprend :
l'un parmi le suivi d'une localisation de l'équipement d'utilisateur sur la base d'un ou plusieurs parmi un identifiant de cellule, identifiant de noeud B évolué, eNB, et identifiant de zone de suivi, et la réception périodique, en provenance de l'équipement d'utilisateur, des informations de coordonnées géographiques indiquant une localisation actuelle de l'équipement d'utilisateur.

4. Procédé selon la revendication 1, où la détermination de la présence ou non d'une ou de plusieurs petites cellules (106) à proximité de l'équipement d'utilisateur basée (102) sur la carte de petites cellules comprend :
récupérer une carte de petites cellules à partir de la base de données cartographique; et
mapper la localisation de l'équipement d'utilisateur avec une localisation de petites cellules sur la carte de petites cellules.

5. Procédé selon la revendication 1, où la carte de petites cellules est transmise à l'équipement d'utilisateur (102) dans l'un d'un message de couche de non-accès, un message en Couche 2/Couche 3, et un message d'information de système lorsque le système de communication sans fil est un système d'évolution à long terme, LTE, et
où la carte de petites cellules est transmise à l'équipement d'utilisateur sur l'un d'un canal de radio et un canal de système de diffusion/multidiffusion multimédia, MBMS.

6. Procédé selon la revendication 1, où la fourniture de la notification qui indique la disponibilité d'une ou plusieurs petites cellules (106) à proximité de l'équipement d'utilisateur (102) comprend :
diffuser la notification qui indique la disponibilité d'une ou plusieurs petites cellules à proximité de l'équipement d'utilisateur, et
où la notification comprend une notification push qui indique la disponibilité de l'une ou plusieurs petites cellules à proximité de l'équipement d'utilisateur.

7. Procédé de réception d'information de petites cellules effectué par un équipement d'utilisateur (102) dans un système de communication sans fil, le procédé étant **caractérisé par** :
envoyer une demande de mise à jour de zone de suivi, TAU, à une entité de réseau central (108) pour la disponibilité d'une ou plusieurs petites cellules (106) à proximité de l'équipement d'utilisateur auxquelles l'équipement d'utilisateur souhaite accéder;
recevoir une notification qui indique la disponibilité d'une ou plusieurs petites cellules à proximité de l'équipement d'utilisateur en provenance de l'entité de réseau central; et
lancer un balayage pour l'une ou plusieurs petites cellules sur la base de la notification reçue,
où recevoir la notification qui indique la disponibilité de l'une ou plusieurs petites cellules (106) à proximité de l'équipement d'utilisateur (102) en provenance de l'entité de réseau central (108) comprend recevoir une réponse de mise à jour de zone de suivi, TAU, comprenant une carte de petites cellules en provenance de l'entité de réseau central.

8. Procédé selon la revendication 7, où envoyer la demande à l'entité de réseau central (108) pour la disponibilité de l'une ou plusieurs petites cellules (106) à proximité de l'équipement d'utilisateur (102) comprend envoyer une demande de mise à jour de zone de suivi, TAU, à l'entité de réseau central sollicitant des informations sur la disponibilité de l'une ou plusieurs petites cellules à proximité de l'équipement d'utilisateur,
où recevoir la notification qui indique la disponibilité de l'une ou plusieurs petites cellules à proximité de l'équipement d'utilisateur en provenance de l'entité de réseau central comprend recevoir une réponse de TAU comprenant des informations cartographiques de petites cellules en provenance de l'entité de réseau central, et
où demander de fournir la disponibilité de l'une ou plusieurs petites cellules comprend au moins l'une des informations de localisation et des capacités de l'équipement d'utilisateur pour accéder à des types différents des petites cellules.

9. Procédé selon la revendication 7, où recevoir la notification qui indique la disponibilité de l'une ou plusieurs petites cellules (106) à proximité de l'équipement d'utilisateur (102) en provenance de l'entité de réseau central (108) comprend :
recevoir une notification comprenant des informations cartographiques de petites cellules en provenance de la station de base dans l'un d'un message de couche de non-accès, et un message de Couche 2/Couche 3, et un message d'information de système lorsque le système de communication sans fil est un système d'évolution à long terme, LTE.

10. Procédé selon la revendication 7, où la carte de petites cellules est obtenue à partir de l'entité de réseau central lorsque l'entité de réseau central configure l'équipement d'utilisateur pour des mesures et une minimalisation des journaux de drive test.

11. Procédé selon la revendication 7, où recevoir la notification qui indique la disponibilité de l'une ou plusieurs petites cellules (106) à proximité de l'équipement d'utilisateur (102) en provenance de l'entité de réseau central (108) comprend :
transmettre des coordonnées géographiques représentant une localisation actuelle de l'équipement d'utilisateur à l'entité de réseau central; et
recevoir une notification qui indique la disponibilité de l'une ou plusieurs petites cellules à proximité de l'équipement d'utilisateur en provenance de l'entité de réseau central en réponse aux informations de localisation.

12. Procédé selon la revendication 7, comprenant en outre :
recevoir une notification en provenance de l'entité de réseau central indiquant qu'aucune petite cellule n'est disponible à proximité de l'équipement d'utilisateur;
déterminer si un balayage pour détecter l'une ou plusieurs petites cellules à proximité de l'équipement d'utilisateur est en cours; et
mettre fin à tout balayage en cours pour l'une ou plusieurs petites cellules sur la base de la détermination.

13. Entité de réseau central (108) destinée à fournir des informations de petites cellules, l'entité de réseau central étant adaptée pour effectuer le procédé défini dans les revendications 1 à 6.

14. Équipement d'utilisateur (102) destiné à recevoir des informations de petites cellules, l'équipement d'utilisateur étant adapté pour effectuer le procédé défini dans les revendications 7 à 12.
